# EUROPEAN PATENT APPLICATION

(11) **EP 2 312 815 A1**
(43) Date of publication of application: **20.04.2011**
(21) Application number: 10159176.6
(22) Date of filing: 06.04.2010
(51) Int. Cl.: H04M 1/725, H04M 1/2745, G06Q 10/00, H04L 12/58

(54) **Management of contact information on a communication device**

(30) Priority: 14.10.2009 US 251540 P
(71) Applicant: RESEARCH IN MOTION LIMITED, Waterloo, Ontario N2L 3W8 (CA)
(72) Inventor: Hirst, David M., Andover, MA 01810 (US); Damodaran, Prakash, Andover, MA 01810 (US); Judge, Francis Patrick, Andover, MA 01810 (US)
(74) Representative: Rickard, David John

(57) **Abstract**

A system and method for the display and selection of contact data for inclusion in an address entry field in a graphical user interface of a communication device is provided. When a character string is input in an address entry field, a selection list such as a drop-down list is presented for selection of a contact having contact information matching the input string. The list is populated from both an address book and a contact data store. The contact data store comprises contact data mined from incoming and outgoing messages at the communication device. The contact data in the contact data store is aged or evaluated for frequency of use. A copy of the contact data store may be maintained in an enterprise system associated with the communication device.

## Description

This application claims priority to U.S. Provisional Application No. 61/251,540, filed on October 14, 2009.

The present application relates generally to management of contact information on a communication device, and in particular to management and display of contact information in a messaging application on a communication device.

Communication devices are typically provided with messaging applications for sending and receiving messages such as electronic mail (e-mail), short message service (SMS), multimedia messaging service (MMS) and the like. Messages to be sent from a communication device are generally addressed to recipients by automatically inserting the appropriate recipient address information into the message, for example when a reply or forwarding message is generated from a message stored on the communication device, by directly inputting a recipient's destination address into the appropriate composition field of the messaging application, or by selecting a recipient from an address book or contact store maintained on the communication device.

If a new message is composed at the communication device and the recipient's contact data is not already stored in the address book at the communication device, the user must input the recipient's address. The user must therefore either memorize the recipient's address, or be able to retrieve the address information from another source. It is therefore desirable to provide an improved system and method for addressing messages at a communication device.

### Brief Description of the Drawings

In drawings which illustrate by way of example only embodiments of this application,

FIG. 1 is a block diagram of an embodiment of a mobile device.

FIG. 2 is a block diagram of an embodiment of a communication subsystem component of the mobile device of FIG. 1.

FIG. 3 is an exemplary block diagram of a node of a wireless network for use with the mobile device of FIG. 1.

FIG. 4 is a block diagram illustrating components of a host system in one exemplary configuration for use with the wireless network of FIG. 3 and the mobile device of FIG. 1.

FIGS. 5 to 7 are diagrams of graphical user interface components for use with the mobile device of FIG. 1.

FIGS. 8a and 8b are schematic representations of a contact data store.

FIGS. 9a and 9b are flowcharts of processes for updating the contact data store of FIG. 8a or 8b.

FIGS. 10a and 10b are flowcharts of cleanup processes for the contact data store of FIG. 8a or 8b.

FIG. 11 is a diagram of a further graphical user interface component for use with the mobile device of FIG. 1.

FIG. 12 is a flowchart of a further process for adding a contact to a contact data store.

FIG. 13 is a flowchart of a process for moving a contact from the contact data store to an address book.

### Description of Preferred Embodiments

The embodiments described herein may provide an improved system for managing and inputting address information in a messaging application on a communication device.

These embodiments will be described in relation to a mobile wireless communication device, hereafter referred to as a communication device. It will be appreciated by those skilled in the art, however, that this description is not intended to limit the scope of the described embodiments to communication devices. The methods and systems described herein may be applied to any appropriate communication or data processing device, whether portable or wirelessly enabled or not, including without limitation cellular phones, smartphones, wireless organizers, personal digital assistants, desktop computers, terminals, laptops, tablets, handheld wireless communication devices, wirelessly-enabled notebook computers and the like.

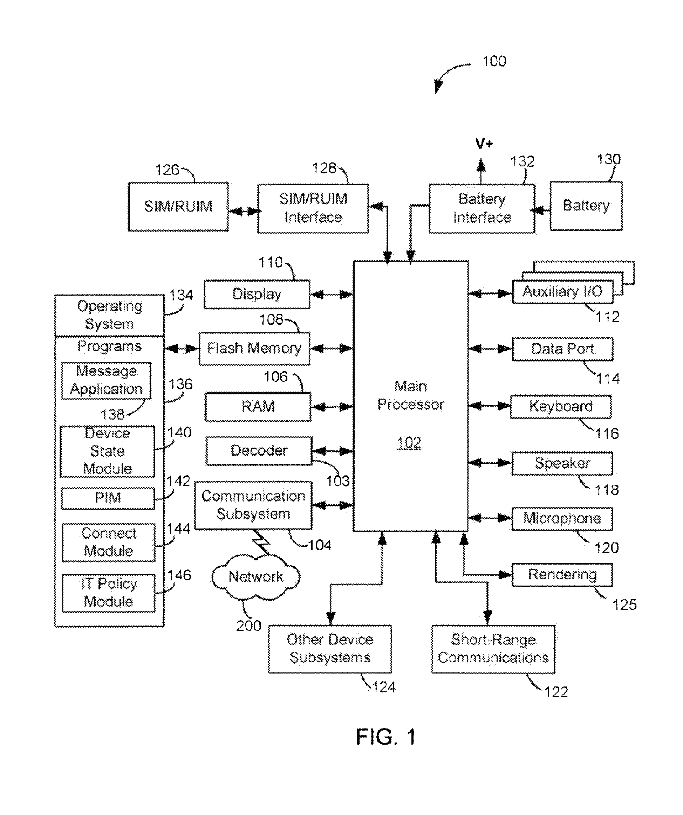

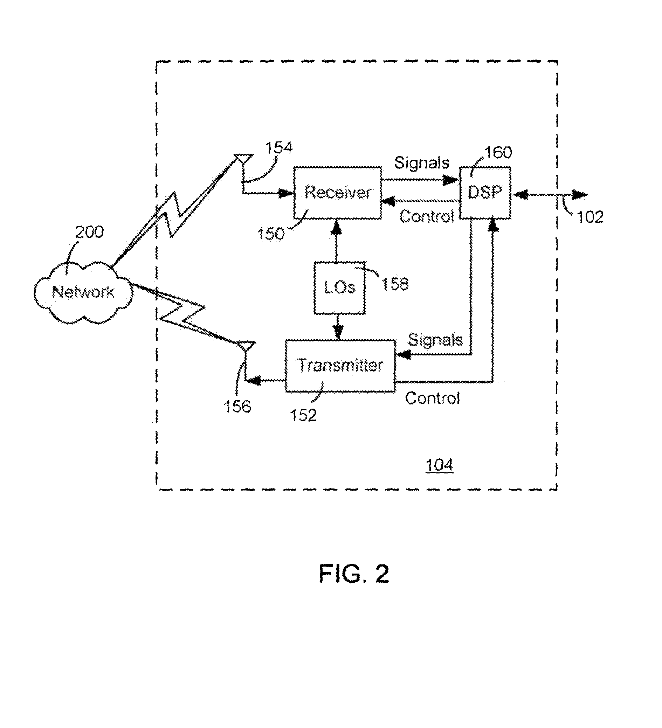

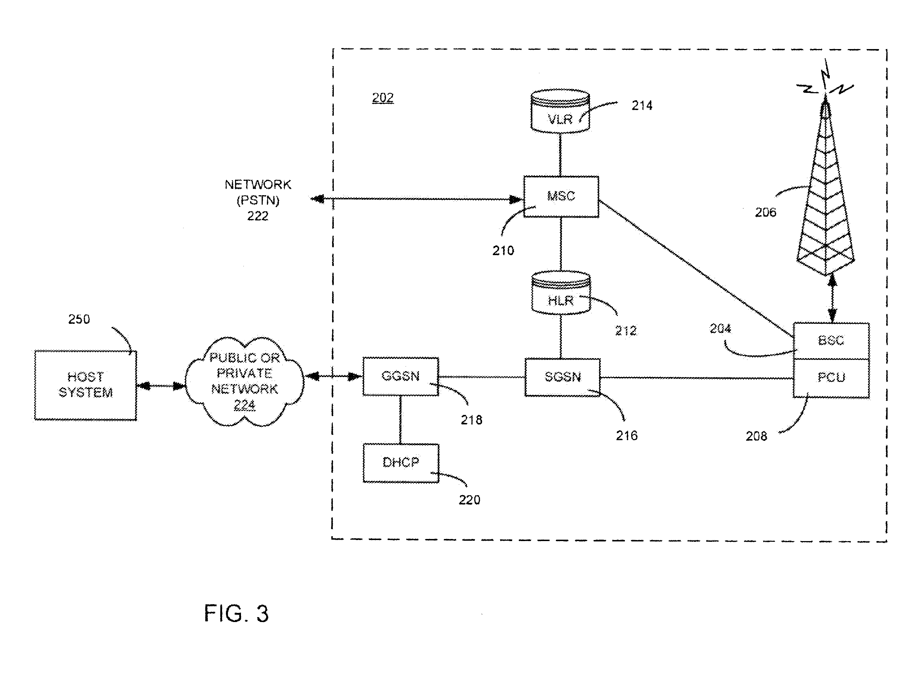

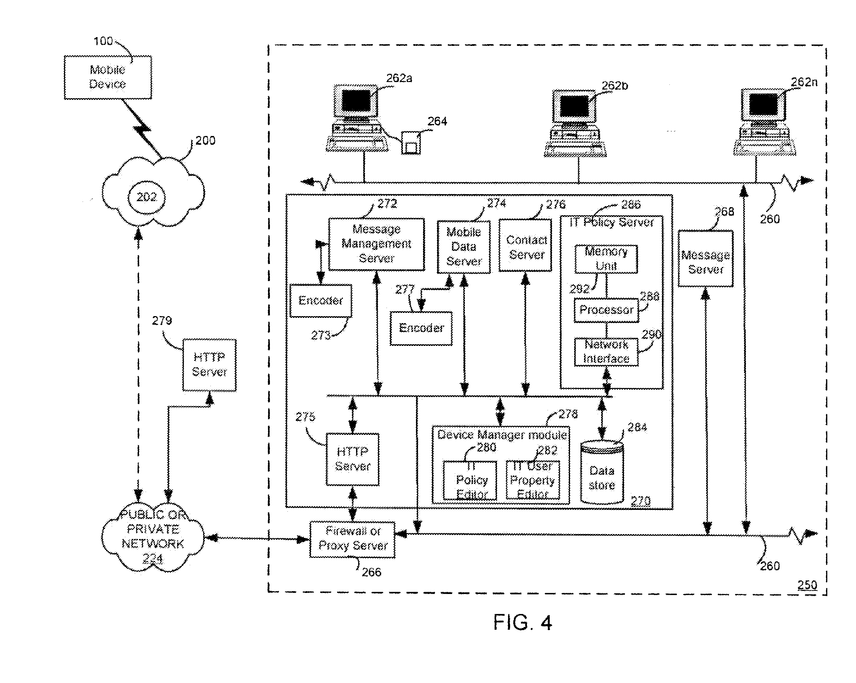

The embodiments described herein may be implemented on a communication device such as that illustrated in FIGS. 1 and 2. The communication device may communicate with other devices over a wireless communication system or enterprise system as illustrated in FIGS. 3 and 4. The communication device 100 may be a mobile device with two-way communication and advanced data communication capabilities including the capability to communicate with other mobile devices or computer systems through a network of transceiver stations. The communication device 100 can also have voice communication capabilities.

FIG. 1 is a block diagram of an exemplary embodiment of a communication device 100. The communication device 100 includes a number of components such as a main processor 102 that controls the overall operation of the communication device 100. Communication functions, including data and voice communications, are performed through a communication subsystem 104. Data received by the communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS, and fourth-generation (4G) networks such as LTE. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The communication device 100 can send and receive communication signals over the wireless network 200 after required network registration or activation procedures have been completed. Network access is associated with a subscriber or user of the communication device 100. To identify a subscriber, the communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the communication device 100 and to personalize the communication device 100, among other things. Without the SIM/RUIM card 126, the communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the communication device 100. Although current technology makes use of a battery, future technologies such as micro fuel cells can provide the power to the communication device 100.

The communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the communication device 100 during its manufacture. Other software applications include a message application 138 that can be any suitable software program that allows a user of the communication device 100 to send and receive electronic messages. Various alternatives exist for the message application 138 as is well known to those skilled in the art. Messages that have been sent or received by the user are typically stored in the flash memory 108 of the communication device 100 or some other suitable storage element in the communication device 100. In at least some embodiments, some of the sent and received messages can be stored remotely from the device 100 such as in a data store of an associated host system that the communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the communication device 100 with respect to such items. This can be particularly advantageous when the host computer system is the mobile device subscriber's office computer system.

The communication device 100 also includes a connect module 144, and an information technology (IT) policy module 146. The connect module 144 implements the communication protocols that are required for the communication device 100 to communicate with the wireless infrastructure and any host system, such as an enterprise system, that the communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the communication device 100 to allow the communication device 100 to use any number of services associated with the enterprise system. The connect module 144 allows the communication device 100 to establish an end-to-end secure, authenticated communication pipe with the host system. A subset of applications for which access is provided by the connect module 144 can be used to pass IT policy commands from the host system to the communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the communication device 100. These software applications can be third party applications, which are added after the manufacture of the communication device 100. Examples of third party applications include games, calculators, utilities, etc.

The additional applications can be loaded onto the communication device 100 through at least one of the wireless network 200, the auxiliary I/O subsystem 112, the data port 114, the short-range communications subsystem 122, or any other suitable device subsystem 124. This flexibility in application installation increases the functionality of the communication device 100 and can provide enhanced on-device functions, communication-related functions, or both. For example, secure communication applications can enable electronic commerce functions and other such financial transactions to be performed using the communication device 100.

The data port 114 enables a subscriber to set preferences through an external device or software application and extends the capabilities of the communication device 100 by providing for information or software downloads to the communication device 100 other than through a wireless communication network. The alternate download path can, for example, be used to load an encryption key onto the communication device 100 through a direct and thus reliable and trusted connection to provide secure device communication. The data port 114 can be any suitable port that enables data communication between the communication device 100 and another computing device. The data port 114 can be a serial or a parallel port. In some instances, the data port 114 can be a USB port that includes data lines for data transfer and a supply line that can provide a charging current to charge the battery 130 of the communication device 100.

The short-range communications subsystem 122 provides for communication between the communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the communication device 100 is substantially similar, except that the received signals are output to the speaker 118, and signals for transmission are generated by the microphone 120. Alternative voice or audio I/O subsystems, such as a voice message recording subsystem, can also be implemented on the communication device 100. Although voice or audio signal output is accomplished primarily through the speaker 118, the display 110 can also be used to provide additional information such as the identity of a calling party, duration of a voice call, or other voice call related information.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the communication device 100 and the wireless network 200 can contain one or more different channels, typically different RF channels, and associated protocols used between the communication device 100 and the wireless network 200. An RF channel is a limited resource that should be conserved, typically due to limits in overall bandwidth and limited battery power of the communication device 100. When the communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

FIG. 3 is a block diagram of an exemplary implementation of a node 202 of the wireless network 200. In practice, the wireless network 200 comprises one or more nodes 202. In conjunction with the connect module 144, the communication device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the communication device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the communication device 100 in accordance with particular, usually predetermined, communication protocols and parameters, under control of its controller. The fixed transceiver equipment similarly demodulates and possibly decodes and decrypts, if necessary, any communication signals received from the communication device 100 within its cell. Communication protocols and parameters can vary between different nodes. For example, one node can employ a different modulation scheme and operate at different frequencies than other nodes.

For all communication devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each communication device 100. The SGSN 216 also performs security functions and access control for data traffic on the wireless network 200. The GGSN 218 provides internetworking connections with external packet switched networks and connects to one or more SGSNs 216 via an Internet Protocol (IP) backbone network operated within the network 200. During normal operations, a given communication device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a communication device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each communication device 100 must be assigned to one or more APNs and communication devices 100 cannot exchange data without first performing a GPRS Attach to an APN that it has been authorized to use. The APN can be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (Ipsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a communication device 100 is not using its PDP Context, the PDP Context can be de-allocated and the IP address returned to the IP address pool managed by the DHCP server 220.

FIG. 4 is a block diagram illustrating components of an exemplary configuration of a host system 250 with which the communication device 100 can communicate in conjunction with the connect module 144. The host system 250 will typically be a corporate enterprise or other local area network (LAN), but can also be a home office computer or some other private system, for example, in variant implementations. In the example shown in FIG. 4, the host system 250 is depicted as a LAN of an organization to which a user of the communication device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's communication device 100 is situated on a LAN connection. The cradle 264 for the communication device 100 can be coupled to the computer 262a by a serial or a Universal Serial Bus (USB) connection, for example. Other user computers 262b-262n are also situated on the network 260, and each can be equipped with an accompanying cradle 264. The cradle 264 facilitates the loading of information (e.g. PIM data, private symmetric encryption keys to facilitate secure communications) from the user computer 262a to the communication device 100, and can be particularly useful for bulk information updates often performed in initializing the communication device 100 for use. The information downloaded to the communication device 100 can include certificates used in the exchange of messages.

It will be understood by persons skilled in the art that the user computers 262a-262n are typically also connected to other peripheral devices, such as printers, etc., which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 can represent a smaller part of a larger network (not shown) of the organization, and can comprise different components and/or be arranged in different topologies than that shown in the exemplary embodiment of FIG. 4.

To facilitate the operation of the communication device 100 and the wireless communication of messages and message-related data between the communication device 100 and components of the host system 250, a number of wireless communication support components 270 can be provided. In some implementations, the wireless communication support components 270 can include a message management server 272, a mobile data server 274, a web server, such as Hypertext Transfer Protocol (HTTP) server 275, a contact server 276, and a device manager module 278. HTTP servers can also be located outside the enterprise system, as indicated by the HTTP server 279 attached to the network 224. The device manager module 278 includes an IT Policy editor 280 and an IT user property editor 282, as well as other software components for allowing an IT administrator to configure the communication devices 100. In an alternative embodiment, there can be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the communication devices 100. The memory unit 292 can store functions used in implementing the IT policy as well as related data. Those skilled in the art know how to implement these various components. Other components can also be included as is well known to those skilled in the art. Further, in some implementations, the data store 284 can be part of any one of the servers.

In this exemplary embodiment, the communication device 100 communicates with the host system 250 through node 202 of the wireless network 200 and a shared network infrastructure 224 such as a service provider network or the public Internet. Access to the host system 250 can be provided through one or more routers (not shown), and computing devices of the host system 250 can operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the communication device 100. The wireless VPN router allows a VPN connection to be established directly through a specific wireless network to the communication device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off the-shelf VPN component, and does not require a separate wireless gateway and separate wireless infrastructure. A VPN connection may be a Transmission Control Protocol (TCP)/IP or User Datagram Protocol (UDP)/IP connection for delivering the messages directly to the communication device 100 in this alternative implementation.

Messages intended for a user of the communication device 100 are initially received by a message server 268 of the host system 250. Such messages can originate from any number of sources. For instance, a message can have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™ server, or another suitable mail server installed in a corporate environment. In some implementations, the host system 250 can comprise multiple message servers 268. The message server 268 can also be adapted to provide additional functions beyond message management, including the management of data associated with calendars and task lists, for example.

When messages are received by the message server 268, they are typically stored in a data store associated with the message server 268. In at least some embodiments, the data store can be a separate hardware unit, such as data store 284, with which the message server 268 communicates. Messages can be subsequently retrieved and delivered to users by accessing the message server 268. For instance, an e-mail client application operating on a user's computer 262a can request the e-mail messages associated with that user's account stored on the data store associated with the message server 268. These messages are then retrieved from the data store and stored locally on the computer 262a. The data store associated with the message server 268 can store copies of each message that is locally stored on the communication device 100. Alternatively, the data store associated with the message server 268 can store all of the messages for the user of the communication device 100 and only a smaller number of messages can be stored on the communication device 100 to conserve memory. For instance, the most recent messages (i.e. those received in the past two to three months for example) can be stored on the communication device 100.

When operating the communication device 100, the user may wish to have e-mail messages retrieved for delivery to the communication device 100. The message application 138 operating on the communication device 100 can also request messages associated with the user's account from the message server 268. The message application 138 can be configured (either by the user or by an administrator, possibly in accordance with an organization's IT policy) to make this request at the direction of the user, at some pre-defined time interval, or upon the occurrence of some pre-defined event. In some implementations, the communication device 100 is assigned its own e-mail address, and messages addressed specifically to the communication device 100 are automatically redirected to the communication device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the communication device 100. The message management server 272 also facilitates the handling of messages composed on the communication device 100, which are sent to the message server 268 for subsequent delivery.

For example, the message management server 272 can monitor the user's "mailbox" (e.g. the message store associated with the user's account on the message server 268) for new e-mail messages, and apply user-definable filters to new messages to determine if and how the messages are relayed to the user's communication device 100. The message management server 272 can also, through an encoder (not shown) associated therewith, compress message data, using any suitable compression/decompression technology (e.g. YK compression, JPEG, MPEG-x, H.26x, and other known techniques) and encrypt messages (e.g. using an encryption technique such as Data Encryption Standard (DES), Triple DES, or Advanced Encryption Standard (AES)), and push them to the communication device 100 via the shared network infrastructure 224 and the wireless network 200. The message management server 272 can also receive messages composed on the communication device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the communication device 100 can be defined (e.g. by an administrator in accordance with IT policy) and enforced by the message management server 272. These may include whether the communication device 100 can receive encrypted and/or signed messages, minimum encryption key sizes, whether outgoing messages must be encrypted and/or signed, and whether copies of all secure messages sent from the communication device 100 are to be sent to a pre-defined copy address, for example.

The message management server 272 can also be adapted to provide other control functions, such as only pushing certain message information or pre-defined portions (e.g. "blocks") of a message stored on the message server 268 to the communication device 100. For example, in some cases, when a message is initially retrieved by the communication device 100 from the message server 268, the message management server 272 can push only the first part of a message to the communication device 100, with the part being of a pre-defined size (e.g. 2 KB). The user can then request that more of the message be delivered in similar-sized blocks by the message management server 272 to the communication device 100, possibly up to a maximum pre-defined message size. Accordingly, the message management server 272 facilitates better control over the type of data and the amount of data that is communicated to the communication device 100, and can help to minimize potential waste of bandwidth or other resources.

The mobile data server 274 encompasses any other server that stores information that is relevant to the corporation. The mobile data server 274 can include, but is not limited to, databases, online data document repositories, customer relationship management (CRM) systems, or enterprise resource planning (ERP) applications. The mobile data server 274 can also connect to the Internet or other public network, through HTTP server 275 or other suitable web server such as a File Transfer Protocol (FTP) server, to retrieve HTTP webpages and other data. Requests for webpages are typically routed through mobile data server 274 and then to HTTP server 275, through suitable firewalls and other protective mechanisms. The web server then retrieves the webpage over the Internet, and returns it to mobile data server 274. As described above in relation to message management server 272, mobile data server 274 is typically provided, or associated, with an encoder 277 that permits retrieved data, such as retrieved webpages, to be decompressed and compressed, using any suitable compression technology (e.g. YK compression, JPEG, MPEG-x, H.26x and other known techniques), and encrypted (e.g. using an encryption technique such as DES, Triple DES, or AES), and then pushed to the communication device 100 via the shared network infrastructure 224 and the wireless network 200. While encoder 277 is only shown for mobile data server 274, it will be appreciated that each of message server 268, message management server 272, and HTTP servers 275 and 279 can also have an encoder associated therewith.

The contact server 276 can provide information for a list of contacts for the user in a similar fashion as the address book on the communication device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the HTTP server 275, the contact server 276, the device manager module 278, the data store 284 and the IT policy server 286 do not need to be implemented on separate physical servers within the host system 250. For example, some or all of the functions associated with the message management server 272 can be integrated with the message server 268, or some other server in the host system 250. Alternatively, the host system 250 can comprise multiple message management servers 272, particularly in variant implementations where a large number of mobile devices need to be supported.

The device manager module 278 provides an IT administrator with a graphical user interface with which the IT administrator interacts to configure various settings for the communication devices 100. As mentioned, the IT administrator can use IT policy rules to define behaviors of certain applications on the communication device 100 that are permitted such as phone, web browser or Instant Messenger use. The IT policy rules can also be used to set specific values for configuration settings that an organization requires on the communication devices 100 such as auto signature text, WLAN/VoIP/VPN configuration, security requirements (e.g. encryption algorithms, password rules, etc.), specifying themes or applications that are allowed to run on the communication device 100, and the like.

Rendering data files originally optimized or prepared for visualization on large-screen displays on a portable electronic device display often requires additional processing prior to visualization on the small-screen portable electronic device displays. According to an embodiment, this additional processing is accomplished by the rendering engine 125 shown in FIG. 1. As will be appreciated by those of skill in the art, the rendering engine can be implemented in hardware, software, or a combination thereof, and can comprise a dedicated image processor and associated circuitry, or can be implemented within main processor 102.

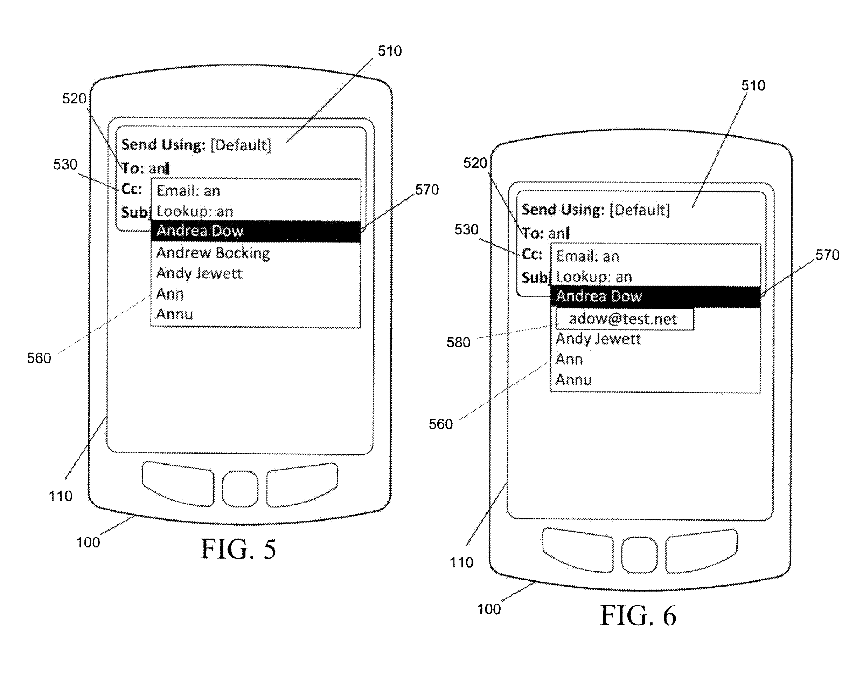

Turning to FIG. 5, a portion of an exemplary graphical user interface 510 for a messaging application such as messaging application 138 is shown. The general operation of messaging applications for various message formats such as e-mail, MMS, SMS, and the like will be understood by those skilled in the art. The graphical user interface 510 depicts a portion of an interface in a messaging application view which may be displayed to a user when addressing a message to a recipient. As is known in the art, the interface 510 includes a "To" data entry field 520 for entry, display, and editing of at least one address for at least one primary recipient of the message and a "Cc" (carbon-copy) data entry field 530 for optional entry, display and editing of at least one address for at least one secondary recipient of a copy of the message. The interface 510 may also comprise other fields, such as a subject line field, a "Bcc" field for entry, display and editing of addresses for at least one optional secondary recipient of a blind copy of the message, and a text field for composing, editing or displaying the content of the message. The graphical user interface 510 may optionally provide fields for entry, editing, and display of other message header content that is editable by the user.

When an address entry field such as 520 or 530 is in focus in the graphical user interface 510, the user may edit the content of that field, for example by typing in an address, name, or a partial address or name of a recipient. To enhance the user experience of the messaging application 138, when such an address entry field 520, 530 is in focus and the application 138 is in an editing mode for the field in focus, a drop-down list 560 may be displayed in the proximity of that field once at least one character has been entered into the field, as shown in FIG 5. If the drop-down list 560 contains elements that are not viewable in the displayable portion of the drop-down list 560 (for example, when the number of list members exceeds the viewable area of the drop-down list 560), then a scroll bar or other user interface element allowing for panning or scrolling of the list may be provided. While the embodiment shown in FIG. 5 illustrates a drop-down list 560, this list may take the form of another user interface element suitable for permitting the display and selection of one or more data items and is not limited to a drop-down list format.

The drop-down list 560 may be populated using entries stored in an address book at the communication device 100 with a name or address beginning with a string matching the string of characters input in the address entry field 520, 530. As characters are added or deleted in the address entry field 520, 530, the drop-down list 560 content may be dynamically updated to reflect the address book entries matching the revised character string. In the example of FIG. 5, the drop-down list 560 comprises a list of common or "friendly" names, beginning with the same character string as that entered in the address entry field 520. Friendly names are generally considered to be more user-friendly because they are, or resemble, the recipient's actual name or nickname. The friendly name may be defined by the recipient or user associated with the address, by an organization associated with the address's domain, or by the user of the communication device 100. The friendly name may correspond to an identified stored as a "common name" in the address book or other contact store. These matching friendly names are associated with e-mail addresses (or addresses appropriate to the type of message to be sent by the messaging application 138) which may or may not begin with the same character string. In a further embodiment, the drop-down list 560 may be populated using entries stored in a global address list, which may be the global access list hosted at the contact server 276. The communication device 100 may be configured to populate the drop-down list 560 first using entries in the local address book, and to also query the global address list for additional entries matching the character string. Once a first set of additional entries is received from the global address list in response to a first character string, if additional characters are added to the string the communication device 100 may simply filter the already received entries without requesting additional data from the global address list. If the character string is changed altogether, the device 100 may then request new additional entries matching the new character string.

In the embodiment shown, display of the friendly name is preferred over display of the corresponding address; thus, if a friendly name and its corresponding address both begin with the same character string as that entered in the address entry field 520, 530, only the friendly name is displayed in the drop-down list 560. If only the e-mail or other address begins with the matching character string, while the friendly name does not, the address or the corresponding friendly name may still be displayed in the drop-down list 560. If display of the address in the drop-down list is preferred over display of the corresponding friendly name, then the drop-down list 560 will be populated with appropriate matching addresses, regardless whether the friendly name matches the character string or not; and if the friendly name matches the character string while the address does not, the address or the corresponding friendly name may still be displayed in the drop-down list 560. It will be appreciated by those skilled in the art that the communication device 100 or messaging application 138 may be configured to set a preference to display either a friendly name or an address.

The content presented in the drop-down list 560 may be sorted in alphabetical order for ease of use, although the content may be presented in different orders, for example by presenting a list of entries identified by friendly name sorted in alphabetical order before a list of entries identified by address. The list or lists may be sorted alphabetically by friendly first name, where a first name is available, or by friendly last name, when a last name is available. Listed addresses may be sorted according to a specific string in the address; for example, e-mail addresses may be sorted according to the string preceding the domain name; addresses corresponding to mobile numbers may be sorted according to area code, country code, or by another portion of the number. Alternatively, the content in the drop-down list 560 may be arranged in order of frequency of use (for example, most frequently used to least frequently) or recency of use.

The process of retrieving matches from the address book based on the character string will be known to those skilled in the art. It will be appreciated that as additional characters are entered into the address entry field 520, 530, the list of possible matches will likely be reduced, resorting in a shorter drop-down list 560 as further characters are entered. It will also be appreciated that while the match against the address book may be conducted by searching for address book entries having an address or friendly name beginning with the same character string entered in the address entry field 520, 530, the search may be configured to return any address book entry having an address or friendly name that comprises that character string at any position within the address or name. In other embodiments, the search may be conducted against other information stored in the address book, such as organization name, thus enabling a user to quickly look up a list of possible recipients associated with a particular organization.

Once the drop-down list 560 is displayed, focus in the graphical user interface 510 may be moved to the drop-down list 560 so that an entry of the drop-down list 560 may be selected for inclusion in the corresponding address entry field. As shown in FIG. 5, the name "Andrea Dow" is in focus 570, and may be selected for inclusion. If multiple selections are permitted, then multiple names within the address entry field may be selected for inclusion in the corresponding address entry field. The address entry field is then populated by the selected information, after which the drop-down list 560 is closed. The drop-down list 560 may be invoked again if a new character string, either in place of or in addition to the selected friendly name or address, is entered in the same address entry field 520 or in a different address entry field such as 530.

To facilitate selection, when a friendly name is displayed in the drop-down list 560 and is in focus, a further pop-up or selection element 580 may be displayed proximal to the friendly name in focus 570, as shown in FIG. 6. The pop-up box 580 may display the address corresponding to the friendly name in focus, enabling the user to confirm that the friendly name in focus is the recipient to be selected from the drop-down list 560. In the embodiment shown in FIG. 6, the address displayed in pop-up box 580 may or may not be focusable within the graphical user interface 510. If the displayed address is focusable, the user may move the focus in the graphical user interface 510 to the displayed address in the pop-up box 580 and select the contact for inclusion in the corresponding address entry field. If the displayed address is not focusable, then the user may not move the focus in the graphical user interface 510 to the address; only the friendly name may be focusable, so the user may simply focus on the friendly name 570 and select it for inclusion in the relevant address entry field.

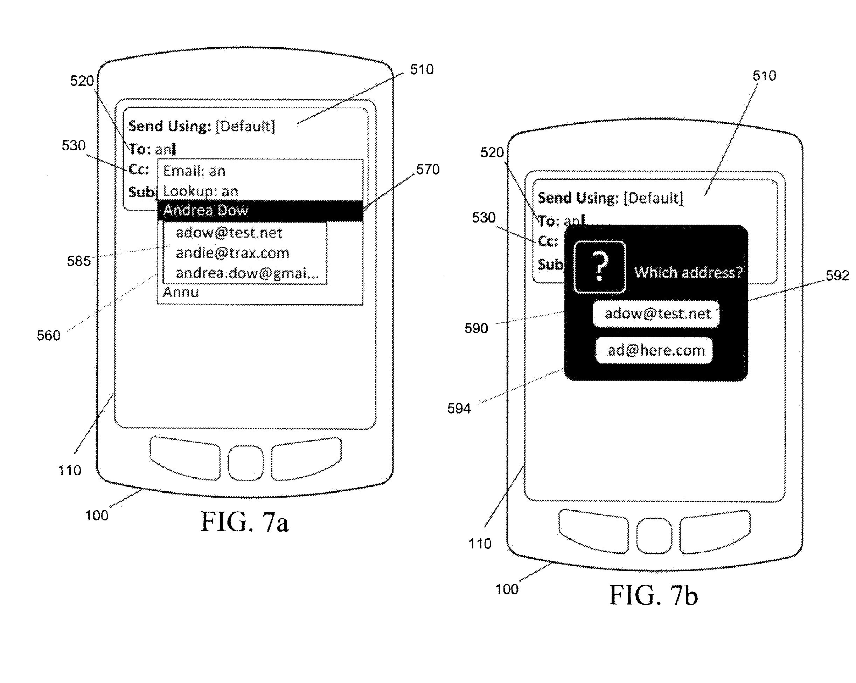

The friendly name may not be unique to an individual recipient or to an individual address. Thus, in a further embodiment shown in FIG. 7a, a pop-up box 585 may display all addresses associated with the friendly name in focus 570. The focus in the graphical user interface 510 may be moved to this pop-up box 585, thus allowing for selection of a particular address associated with the friendly name. Alternatively, if the friendly name in focus 570 is selected, a further dialog box or user interface element may be displayed in the graphical user interface 510, requiring selection of one or more of the addresses associated with the selected friendly name. Upon selection, the selected information is inserted into the appropriate address entry field 520, 530. It will be appreciated that the displayed information in the address entry field 520, 530 may be either the friendly name or the selected address. In a further embodiment, after friendly name is placed in focus at 570 as shown in FIG. 5 and selected, if it is associated with more than one address, a further dialog box 590 may be displayed, as shown in FIG. 7b. The dialog box 590 may list the possible addresses in interface elements 592, 594, which may be selected and actuated by the user to select the appropriate address for the message.

The foregoing graphical user interface 510 provides a convenient method of selecting and including a recipient in the address entry fields 520, 530. However, the message may be intended for delivery to a recipient not presently listed in the address book at the communication device 100. The recipient's address may be available from a message store accessible to the messaging application 138 at the communication device 100, because the recipient was a party to a previously stored message, either as the sender or as a recipient. Accordingly, the matching process described above for the character string in the address book may be carried out against a list of friendly names or addresses mined from a message store stored in a memory of the communication device 100. This match may be carried out in place of, or in addition to, the matching process carried out against the address book. If the match is carried out in addition to the address book matching process, then the results of both searches may be integrated and presented as a unified list in the drop-down box 560. Thus, the drop-down box 560 shown in FIGS. 5 through 7 may comprise results of a search of both mined contact data and address book data based on the entered character string. Where mined contact data includes a friendly name associated with a first address matching a friendly name stored in the address book associated with a second address, then this information about the friendly name may be merged in the pop-up box 585 of FIG. 7, such that for the friendly name in focus 570, some corresponding addresses in the box 585 are drawn from the mined contact data, and others are drawn from the address book. It will be appreciated that the search of the mined contact data may be carried out in similar manners to those described above

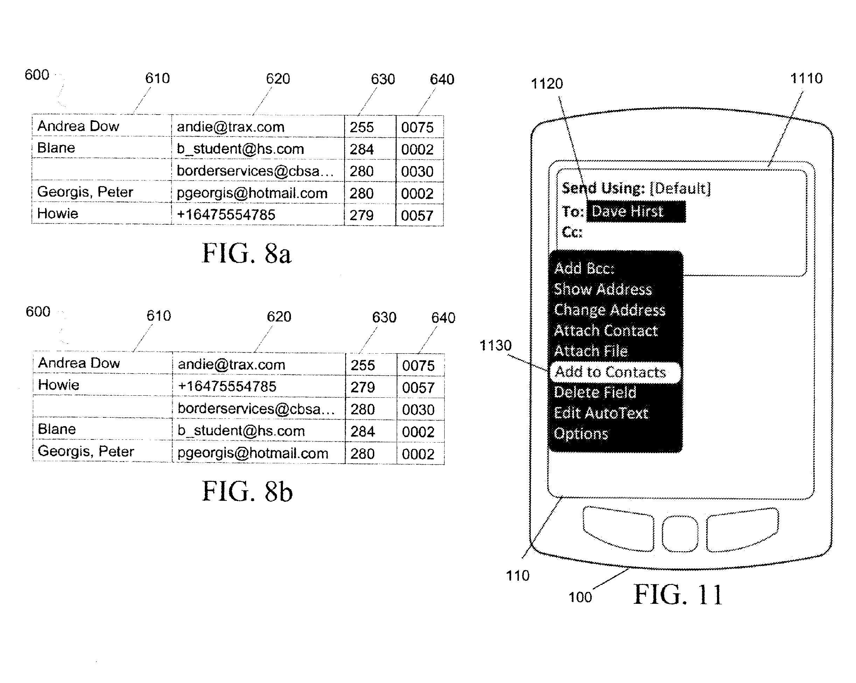

The mined contact data may be stored in a file or other data repository stored in flash memory 108, RAM 106, or another storage medium local to the communication device 100. Representative arrays of data that may be contained in such a contact data file are illustrated in FIGS. 8a and 8b. It will be appreciated that the format and structure of such a file or repository may take any appropriate format and structure, and may include less or more data than illustrated herein. A contact data store 600 is presented in the arrangement shown in FIGS. 8a and 8b for convenience. Turning first to FIG. 8a, the contact data store 600 may comprise the address of the contact mined from the message store 620; a timestamp 630 denoting the last time the contact was mined from the message store; and a frequency value 640. The use and definition of the timestamp 630 and the frequency value 640 is described below. When available from the message store, the contact data store 600 may also comprise a friendly name 610 for the contact. The fields of timestamp 630 and frequency value 640 are optional; one or both may be excluded, so that in a simpler form, the contact data store 600 comprises only the address 620 and the optional friendly name 610. The friendly name 610 and address 620 of the contact data store 600 may then be searched in the manner described above when characters are entered into the address entry fields 520, 530.

Data 610, 620, and optional data 630, 640 may be loaded from pre-existing contact data store 600 stored at the communication device 100, or may be generated from the existing message store on the communication device 100. A process responsible for managing the contact data store 600 queries the message store for the addresses and corresponding friendly names, if available, of contacts identified as senders and/or recipients of messages in the message store. If the contact data store 600 is intended to be queried along with the address book data as described above, to avoid duplication with the address book it is also determined whether the addresses are already stored in the address book. If the addresses are already stored in the address book, they are not added to the contact data store 600. Alternatively, if the contact data store 600 is intended to be the only source of data to populate the drop-down list, then these addresses are not discarded, but are instead added to the contact data store 600. It will be understood that by avoiding address book duplication, the size of the contact data store 600 may be reduced. If a limit is placed on the size of the contact data store 600, then omitting contact data already included in the address book and searching the address book in addition to the contact data store 600, may increase the number of different addresses available to the user in the drop-down list 560 because space need not be dedicated to storing duplicative data. This initial build of the contact data store 600 may take place when the messaging application or process is first initialized, or upon some other event, such as a user instruction.

Data 610, 620, and optional data 630, 640 may be added to the contact data store 600 each time a message is received or sent at the communication device 100. Each time a message is received or sent, the communication device 100, for example via the messaging application 138, notifies a process managing the contact data store 600 of the senders and/or recipients of the message, including the address and friendly name if available. It will be appreciated that the process may not be notified of the contact data of the user of the communication device 100, but only of other senders and recipients. This data is then added to the contact data store 600. The data may be inserted into the contact data store 600 such that the contact data store 600 is maintained in alphabetical order according to friendly name, address, or both, or according to a different sort order. In the example of FIG. 8a, the data is arranged first in order of ascending address 620 and secondly in order of format, with alphanumeric e-mail address listed alphabetically first, followed by a SMS address (i.e., a mobile number). In an alternative embodiment, the data is added to the contact data store 600 in order of receipt from the messaging application 138.

To avoid duplication of entries that are already present in the address book, prior to insertion into the contact data store 600, either the managing process or the messaging application 138 determines which contacts are already stored in the address book of the communication device 100. Data duplicating an address already stored in the address book is then discarded and not added to the contact data store 600. However, if a contact mined from a message has the same friendly name as an address book entry but a different address, that contact information may still be added to contact data store 600. If the contact mined from the message has the same address but a different friendly name that what is stored in the address book, the contact may not be added to the contact data store 600 if the content of the address book may be given precedence, since the same address already exists in the address book. In an alternative embodiment, the contact may still be added to the contact data store 600 as well, even if the address is the same.

Thus, when a message is addressed at the communication device 100, information about potential recipients besides those whose contact data is stored in the address book may be presented to the user in the drop-down list 560. The user is accordingly provided with a list of potentially more timely and relevant contacts, particularly if the user has not kept the address book on the communication device 100 up to date with recent contacts.

The drop-down list 560 may behave in the same manner, regardless whether the entries populating the drop-down list 560 were retrieved from the address book, global address list the contact data store 600, or a combination thereof. The information populating the drop-down list 560 may be presented in alphabetic order, thus integrating the address book data with the contact data store 600 data. In a further embodiment, not illustrated, data retrieved from the address book may be marked with an indicator in the drop-down list 560, so that the user can identify which data was retrieved from the address book or global address list, and which was not.

The communication device 100 may be limited in the amount of storage available for the contact data store 600. In addition, insertion of every possible recipient mined from the message store may result in an unwieldy and long list of matching friendly names or addresses. Accordingly, limits may be placed on the content of the contact data store 600. In one embodiment, a limit may be placed on the number of entries in the contact data store 600, or a size limit may be imposed on the contact data store 600. The content of the contact data store 600 may therefore be subject to rules to maintain the number of entries to a predetermined size, or to maintain only contact data that is likely to be relevant to the user. The contact data store 600 may thus be subjected to an aging process, an evaluation of frequency of use, or both.

In a simple aging process, the entries may be maintained in the contact data store 600 using a first-in-first-out methodology. If a predefined limit on the number of contact data store 600 entries is established, for each new contact added to the contact data store 600, the oldest contact currently in the contact data store 600 is deleted. If the contact as mined from the message already exists in the contact data store 600, then either the existing contact is left in the contact store, or else the existing contact is deleted and then re-added to the contact data store 600. Deleting and re-adding the existing contact will more accurately reflect the recent use of that contact address at the communication device 100. In this simple embodiment, the contact data store 600 may comprise only the address 620 and the friendly name 610 associated with the address, if available, for each contact.

In another aging process, contacts in the contact data store 600 are deleted when they have been present in the contact data store 600 for more than a predefined period of time, such as thirty days. The deletion may be accomplished using a cleanup process that may run periodically, for example daily or weekly, or intermittently, for example upon user command, upon the contact data store 600 reaching a predetermined size or number of entries, or when the managing process is notified of an address to be added to the contact store 600. If the contact reappears in a subsequently received or sent message, it may be added to the contact store 600 again. Evaluation of the "age" of a contact, i.e. how long it has been present in the contact data store 600, may be carried out by querying the message store on the communication device 100 for the last timestamp of a message associated with that contact. The contact data store 600 may therefore comprise, for each contact, the address 620, a friendly name 610 if available. In another embodiment utilizing this aging process, a timestamp indicating the time the most recent message associated with that contact is stored in the contact store 600, as timestamp 630. The contact data store 600 may therefore comprise, for each contact, the address 620, a friendly name 610 if available, and an associated timestamp 630. The timestamp may be determined from a time of receipt of a message at or transmission of a message from the communication device 100 or an associated message server 238, the time at which the contact data is evaluated for inclusion in the contact data store 600, or some other time of a use of the contact address in a message at the communication device. The cleanup process therefore does not need to query the message store to obtain a timestamp for the contact.

The foregoing aging processes, which may be used separately or together, give preference to contacts that have been communicated with recently. In addition or alternatively, preference may also be given to frequent contacts. A contact may be defined as frequent if it is used as a recipient and/or a sender in a message received at or sent from the communication device 100 with at least a predetermined frequency. For example, a frequent contact may be one that is used as either a sender or a recipient at least once a day, or one that is used by the user of the communication device 100 as a recipient of a message at least once per week. A frequent contact may be defined as one meeting a predetermined frequency defined for a period of time, for example once a day over the most recent thirty days, or may be defined as a contact having a predetermined number of uses over a period of time, such as twenty uses over the most recent twenty-eight days, which would be approximately equivalent to one use per business day.

The frequency value may be determined by querying the message store for each contact in the contact data store 600 to obtain the number of messages associated with that contact over a predetermined period of time, and comparing a frequency value derived from that number (such as number of messages divided by units of time) to the predetermined threshold value. The frequency value may be determined in a variety of other ways. For example, the predetermined period of time may be defined as the period between the current time and the timestamp 630 for a contact in the contact data store 600. A count of the number of messages using that contact is obtained from the message store, so that the frequency value is determined from the count and the period of time between the current time and the timestamp 630. The contact data store 600 therefore need not comprise a frequency value 640 for each entry. In an alternate embodiment, data relating to the frequency of use over a predetermined period of time may be stored in the contact data store 600, as indicated by frequency value 640. The frequency value 640 may comprise a count of the number of times the contact in the contact data store 600 was used since it was added to the contact data store 600, and may be updated each time a message is sent or received at the communication device 100. Alternatively, it may comprise a value previously computed the last time a cleanup process or other process evaluating frequency value was invoked, and therefore may not reflect the most recent activity at the communication device 100. However, the frequency value may still be used to prune infrequent contacts from the contact data store 600. The managing process may be configured to update the frequency value 640 on an ongoing basis, as notification of contact addresses is received, although this may require accessing further data relating to usage of that contact over the relevant period of time.

If a frequency value is evaluated for each contact in the contact data store 600, then the frequency value may be used to prune the store 600 of infrequently used contacts by deleting contacts from the store 600 that have a frequency value below a predefined threshold. For example, a contact that is significantly older than other contacts in the contact data store 600, but that has been frequently used since its addition to the contact data store 600, may be retained, whereas more recently added contacts that were infrequently used may be deleted. It will be appreciated, however, that if frequency values are used in conjunction with an aging process, a list of contacts more accurately reflecting the likelihood of use may be provided. For example, a frequency value may be established only for those contacts that are used as recipients of messages sent from the communication device 100. A cleanup process operating on the device 100 may therefore evaluate both the age and the frequency value of each entry in the contact data store 600, such that contacts are deleted from the store 600 only if the age exceeds a predetermined age limit and the frequency of use is below a predetermined threshold, or if the age and the frequency of use are within specified ranges. By appropriate choice of predetermined age limit and frequency of use threshold or ranges, the contacts stored in the store 600 may be periodically pruned to remove contacts that are less likely to be used by the user to address a message. If the contact reappears in a subsequently received or sent message, it may be added to the contact store 600 again.

The evaluation of the frequency value of each entry in the contact store 600 may be assessed on a periodic or intermittent basis, or on an ongoing basis. For example, a cleanup process may determine or check the frequency value of each contact in the contact store 600 on a daily or weekly basis, and delete those contacts that fail to meet the predefined criteria from the contact store 600. If the contact reappears in a subsequently received or sent message, it may be added to the contact store 600 again.

The contact data store 600 may be maintained in a sorted order. As contacts are added to the contact data store 600, they are stored in association with the frequency value 640 and timestamp 630. FIG. 8b illustrates the contact data store 600 with optional friendly names 610, addresses 620, timestamps 630 and frequency values 640. In the example of FIG. 8b, however, the entries of the store 600 are arranged first in order of decreasing frequency value 640, and secondly in order of decreasing timestamp 630. Thus, in FIG. 8b, the entry for "Georgis, Peter" and the entry for "Blane" have the same frequency value 640, but "Georgis, Peter" is listed in the contact data store 600 after "Blane" because the timestamp 630 associated with "Georgis, Peter" is less than the timestamp 630 associated with "Blane".

Thus, each time a message is received or sent, the communication device 100, for example via the messaging application 138, may notify a process managing the contact data store 600 and provide the addresses and optionally the friendly names of the senders and/or recipients of the message. When a contact is added to the data store 600, it may be stored in association with the current timestamp or the timestamp of the message from which it was extracted, and in association with a default frequency value (e.g., "0001"). If the contact is already present in the data store 600 upon receipt of the notification of the addresses and friendly names of the senders and/or recipients, then the process managing the contact data store 600 may update the timestamp associated with the contact and increment or recalculate the frequency value to reflect the further usage of that contact. In a further embodiment the timestamp may not be updated while the frequency value is updated. If the contact was not present in the data store 600, then the contact may be inserted in the data store 600 in the appropriate position reflecting the sort order of decreasing frequency value 640 and decreasing timestamp 630.

If there is a predetermined limit for the contact data store 600, either due to a predefined maximum size or a maximum number of entries in the store 600, each time the communication device attempts to add a new contact to the store 600 when the store 600 is at capacity, the communication device 100 determines whether an existing contact in the store 600 can be discarded in favour of the new contact. The communication device 100 may compare the new contact to the entries already in the contact data store 600 to determine if the frequency value of the new contact (which in this case may be the default frequency value) is less than the frequency values 640 of the existing contacts. If it is less, then the new contact is not added. If it is not less, but instead is equal to the frequency value 640 of one or more of the existing contacts in the contact data store 600, then the timestamps of the new contact and of the existing contacts are compared. In one embodiment, where the frequency value 640 reflects the number of times a contact has been used, the oldest (i.e., having the lowest timestamp value) of the existing contacts having the same frequency value may be discarded if the new contact is associated with a newer timestamp. As shown in FIG. 8b, the oldest contact in the contact data store 600 is likely the last contact in the contact data store 600, in this example "Georgis, Peter", since the contacts are listed in order of both decreasing frequency and decreasing timestamp. If all existing contacts have the same timestamp as the new contact, then no existing contact is discarded, and the new contact is not added.

In a further embodiment, the frequency value 640 may reflect a frequency rather than a count, i.e., the number of uses of that contact divided by a unit of time. Thus, the frequency value 640 may not be an integer value, since the frequency may be a fractional number, and may even be less than 1. In such an embodiment, the fact that an older contact in the contact data store 600 (one with a lower timestamp 630 value) had maintained a given frequency value 640 for the duration of its inclusion in the contact data store 600 may signify that the contact is actually more important than a recently added contact with the same frequency value. For example, in FIG. 8b, "Georgis, Peter" and "Blane" have the same frequency value 640. However, the timestamp 630 associated with "Georgis, Peter" indicates that it has been present in the contact data store 600 longer than "Blane", so the former contact would have been used more times than the latter. In this embodiment, if a contact is to be discarded, the "Blane" contact may be discarded rather than the "Blane" contact.

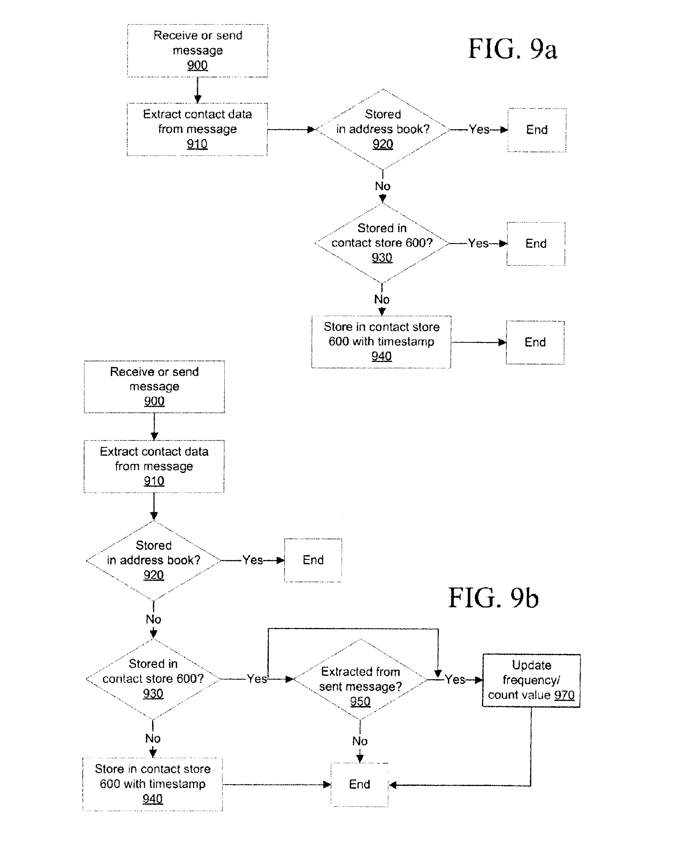

The flow chart of FIG. 9a depicts a method by which contacts may be added to the contact data store 600 for use in populating a drop-down list in conjunction with the address book. At 900, a message is received at or sent from the communication device 100. Contact information, such as the friendly name, address, and optionally timestamp, are extracted from the message at 910. For each address, the contact information is compared against contacts in the address book at 920. If the address is already found in the address book, in this embodiment there is no need to insert the data into the contact data store 600; accordingly, that contact is discarded and not added to the store 600. If the address is not found in the address book, then the contact information is compared against the address information in the contact data store 600 at 930. If it does not exist in the contact data store 600, then it is added to the store 600 at 940 with an associated timestamp. If the contact information already exists in the contact data store 600, then frequency information relating to that contact may be updated.

In another embodiment illustrated in FIG. 9b, the process begins in a similar fashion. The message is received or sent at 900, and the contact information extracted at 910. The extracted contact information is compared against the address book at 920; if the address is already stored in the address book, then the information is not added to the contact data store 600. If the address is not stored in the address book, it is determined whether the contact information already exists in the contact data store 600 at 930. If it does not, the information is stored in the contact store 600 with an associated timestamp at 940. If the contact information was already stored in the store 600, then a frequency or count value 640 is updated. In one alternative branch, if it is determined that the contact was a recipient of a message sent from the communication device 100 at 950, then the frequency value 640 for that contact in the store 600 may be updated at 970. The frequency value 640 may be simply updated by increasing a counter for that entry in the contact data store 600. In another alternative, the frequency value 640 may be updated for all contacts, regardless of whether it was used as a recipient for a message sent from the communication device 100.

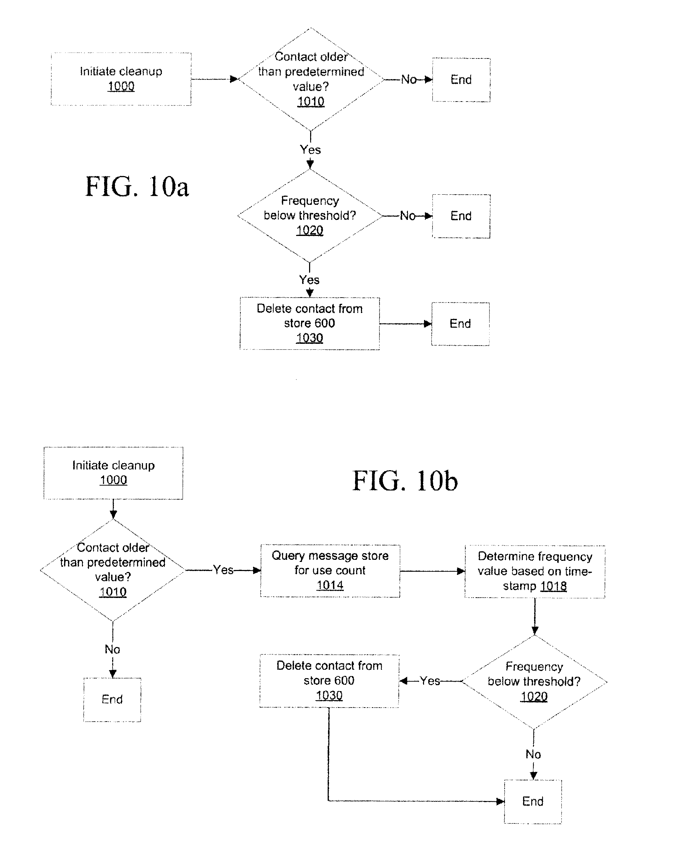

FIG. 10a depicts an overview of a method by which contacts may be purged from the contact data store 600. At 1000, a cleanup process is invoked. As explained above, the cleanup process may be periodic, intermittent, or ongoing. In the embodiment illustrated in FIG. 10, if the contact's age is determined to be less than a predetermined value (for example, 30 days) at 1010, then it is not deleted from the store 600. If the contact is older than the predetermined value but its frequency of use is determined at 1020 not to be below a predetermined threshold at 1020 (for example, not below a frequency of use of once per day), then it is not deleted from the store 600. However, if the contact fails to meet either criterion, it is deleted from the store 600 at 1030.

A further embodiment of a cleanup or purging method is illustrated in FIG. 10b. As in FIG. 10a, a cleanup process is invoked at 1000. If the contact is determined to have an age less than a predetermined value at 1010, it is not deleted from the contact data store 600. Otherwise, the message store of the device 100 is queried for a count value representing the use of that particular contact at 1014. This value is used, together with a timestamp stored for the contact in the contact data store 600, to determine a frequency value at 1018. If this frequency value is determined to be below a predetermined threshold at 1020, then it is deleted from the store 600 at 1030. If the frequency value is not below the predetermined threshold, then it is retained in the contact data store 600.

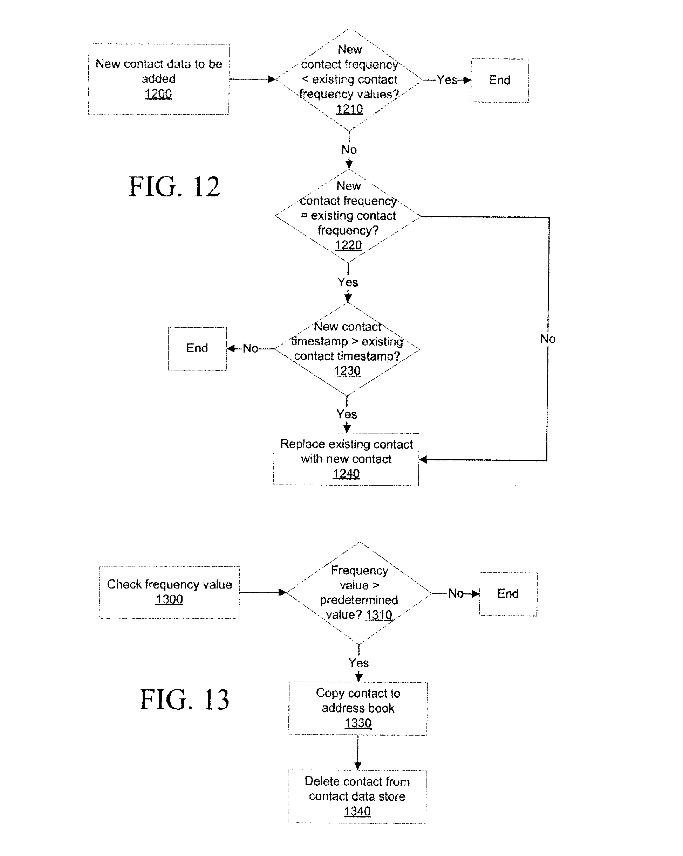

FIG. 12 illustrates a process for adding new contact data to the contact data store 600, in which an existing contact in the store 600 is overwritten or replaced. This process may be followed in an embodiment where the contact data store 600 is at capacity; this may have already been determined in a previous step. At 1200, it is determined that new contact data is available to be added to the contact data store 600. It may have already been determined that the contact is not already included in the store 600, or in the address book at the communication device 100. At 1210, it is determined whether the frequency assigned to the new contact (which may be a default value, as described above) is less than any existing frequency values 640 in the contact data store 600. If it is less than any existing frequency values, then the process may end and the new contact is not added to the contact data store 600. If it is not less than any existing frequency values, then at 1220 it is determined if the frequency value for the new contact is equal to any existing frequency values for any contacts in the contact data store. If it is not equal, then the frequency value must be greater than an existing contact in the store 600; this may occur if the default frequency value assigned to a new contact is greater than the lowest possible frequency value available to an existing contact in the store 600. Therefore, the new contact replaces the existing contact in the store 600 at 1240. If the frequency value of the new contact is equal to one or more existing contact frequency values, then at 1230 the timestamps of the new contact and the existing contacts are compared. If the new contact timestamp is not greater than the existing contacts' timestamp (i.e., the new contact is older than or the same age as an existing contact in the contact data store 600), then the process ends and the new contact is not added to the store 600. If the new contact timestamp is less than an existing timestamp having the same frequency value in the contact data store 600, then the new contact replaces this older contact at 1240.

If, in a variant of this embodiment, the communication device 100 were configured to prefer contacts with older timestamps over contacts with newer timestamps, if their frequency values are equal, then the results of decision box 1230 would be reversed.

In a further embodiment, the user may be provided with control over the deletion of individual entries in the contact data store 600. As shown in FIG. 11, once a recipient friendly name or its associated address is displayed in the appropriate address entry field 1120, a context menu 1130 may be invoked in the graphical user interface 1110, providing the option to ad the contact to the address book. If this option is selected, the contact is added to the address book (a further address book view may be invoked to allow the user to enter further data about the contact), and if it is currently stored in the contact data store 600, it is deleted from the store 600. This may have the result of allowing more recently used contacts to be added to the store 600, while continuing to provide the moved contact in the drop-down list of recently used contacts, if the drop-down list is populated using the address book as well as the store 600.

In still a further variant, the communication device 100 may be configured to store a contact from the contact data store 600 in the address book at the communication device 100 and delete the contact from the store 600 if the contact's frequency value 640 exceeds a predetermined value. In this embodiment, it is presumed that frequent or high usage of a given contact suggests that the user may wish to maintain a more permanent record of the contact's address. The contact may be moved to the address book either automatically, or else the messaging application 138 or the process maintaining the contact data store 600 may display a prompt to the user of the communication device 100 asking the user whether the contact should be moved to the address book. Contacts may be moved to the address book on an *ad hoc* basis, as messages are sent/received at the communication device 100 and the addresses therein mined for inclusion in the contact data store, or as part of a clean-up process. As shown in FIG. 13, at 1300 the frequency value of a contact in the contact data store 600 is checked. This may form part of a clean-up routine, or this step may be carried out if it is determined that a new contact should be stored in the contact data store 600, for example at step 940 of FIG. 9a or 9b. At 1310, the frequency value of the contact in the store 600 is checked to determine if it exceeds a predetermined value at 1310. If it does not, the process ends; but if it does, then the contact may be copied to the address book at the communication device 100 at block 1330, either automatically, or in response to a user confirmation. Once the contact is copied to the address book, it may be deleted from the contact data store 600 at 1340.

The predefined size of the contact data store 600 and its number of entries, and any predetermined time limits or frequency thresholds may be established via an IT policy, or optionally by the user at the communication device 100. The use of the contact data store 600 as a source for populating the drop-down list 560 may also be configured as enabled or disabled by the user at the communication device 100, or by an administrator through an IT policy. If address book data is stored in encrypted form on the communication device 100, it may be desirable to likewise store the contact data store 600 in encrypted form as well. When the contact data store 600 is needed to populate a drop-down list, the data of the store 600 is decrypted, any required searches are conducted, and the results used to populate the drop-down list 560.

Because messages sent by and received at the communication device 100 may be routed through the host system 250, namely the message server 268, the content of the contact data store 600 may be replicated at the host system 250. In one embodiment, a store of data is generated and maintained at the message server 268 or at another component of the host system 250 the same manner as described above for the communication device 100. When an outgoing or incoming message is detected, the host system 250 extracts the addresses of senders and recipients. Because the host system 250 maintains a copy of the communication device 100 address book or stores information regarding the content of the communication device 100 address book, similar queries can be performed to determine which contacts extracted from messages are to be added to a parallel contact data store at the host system 250. If changes are made to the contact data store 600 at the communication device 100, those changes may be transmitted to the host system 250 as necessary. For example, if the user elects to add a contact to the address book, thus causing the contact to be deleted from the contact data store 600 at the communication device 100, the change to the address book and to the contact data store 600 may be transmitted to the host system 250 together. Alternatively, after an initial copy of the contact data store 600 is synchronized between the communication device 100 and the host system 250, the communication device 100 may transmit changes to the contact data store 600 to the host system 250 each time such a change is made. As a third alternative, a copy of the entire contact data store 600 may be transmitted to the host system 250 as part of a synchronization or backup operation, which may be carried out on a periodic or intermittent basis. With any method, if the contact data store 600 on the communication device 100 is deleted or corrupted, if the communication device 100 is lost, upgraded or reset, a copy of the contact data store 600 will still be available from the host system 250 and may be restored to the communication device 100, or loaded onto a new communication device 100.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. It will also be appreciated that although the embodiments herein have been directed generally to e-mail messages, similar systems and methods may be carried out in respect of other types of messages. It will be appreciated that when the messaging application 138 for an e-mail message is invoked, the addresses and friendly names used to populate the drop-down list 560 would be retrieved from those contact data store 600 records and address book records comprising an e-mail address. If the message is a differently formatted message, such as an SMS message, a similar drop-down list 560 may be implemented, but it will likely be populated using mobile numbers and friendly names associated with mobile numbers. A contact data store 600 for SMS, MMS or other messaging types may be stored separately from the contact data store 600 for e-mail messages, or all contact data may be stored together in a single store 600.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

## Claims

1. A method, comprising:
retrieving, from memory at a communication device (100), a set of contacts matching a character string input in an address entry field (520) at the communication device,
wherein the set of contacts comprises contacts retrieved from a contact data store (600), said contacts being obtained from both messages received at and messages transmitted from the communication device, the contacts having at least a minimum predetermined frequency of use or having been stored in the contact data store for a period of time within a predetermined limit; and
inserting an address for a contact selected from the set of contacts into a message to be transmitted from the communication device.

2. The method of claim 1, further comprising transmitting the message comprising the address.

3. The method of either claim 1 or claim 2, further comprising:
extracting (910) contacts from both messages received at and messages transmitted from the communication device, said contacts comprising at least an address for at least one of a recipient and a sender of each message; and
storing (940) the extracted contacts in the contact data store.

4. The method of claim 3, wherein the set of contacts further comprises contacts retrieved from an address book and matching the character string, and further wherein storing an extracted contact comprises storing said extracted contact if it does not match a contact currently stored in the address book at the communication device.

5. The method of either claim 3 or claim 4, further comprising:
storing a frequency value (970) in association with each contact in the contact data store (600), the frequency value representing a frequency of use of said contact since its inclusion in the contact data store.

6. The method of any one of the preceding claims, further comprising:
deleting (1030) from the contact data store contacts stored in the contact data store for longer than the predetermined limit and having less than the minimum predetermined frequency of use.

7. The method of claim 6, wherein deleting is carried out either:
periodically; or
each time an extracted contact is stored in the contact data store.

8. The method of claim 3, wherein the communication device is in communication with a host system (250), the method further comprising:
the host system (250) extracting contacts from both messages received at the host system for transmission to the communication device and messages received from the communication device for transmission from the host system, said contacts comprising at least an address for at least one of a recipient and a sender of each message; and
storing said extracted contacts in a second contact data store at the host system.

9. A communication device (100), comprising:
means (102, 122) adapted to receive and transmit messages;
means (106, 108) adapted to store a contact data store (600) comprising contacts obtained from both messages received at and messages transmitted from the communication device, the contacts having at least a minimum predetermined frequency of use or having been stored in the contact data store for a period of time within a predetermined limit;
means (102) adapted to retrieve a set of contacts matching a character string input in an address entry field displayed on the communication device, wherein the set of contacts comprises contacts retrieved from the contact data store; and
means (102) adapted to insert an address for a contact selected from the set of contacts into a message to be transmitted from the communication device.

10. The communication device of claim 9, further comprising means (122) adapted to transmit the message comprising the address.

11. The communication device of either claim 9 or claim 10, further comprising:
means (102) adapted to extract contacts from both messages received at and messages transmitted from the communication device, said contacts comprising at least an address for at least one of a recipient and a sender of each message; and
means (106, 108) adapted to store the extracted contacts in the contact data store.

12. The communication device any one of claims 9 to 11, further comprising means (106, 108) adapted to store a frequency value in association with each contact in the contact data store, the frequency value representing a frequency of use of said contact since its inclusion in the contact data store.

13. The communication device of claim 12, wherein the means adapted to store the contact data store is further configured to:
delete from the contact data store contacts stored in the contact data store for longer than the predetermined limit and having less than the minimum predetermined frequency of use.

14. The communication device of claim 13, wherein the means adapted to store the contact data store is configured to carry out deletion either:
periodically; or
each time an extracted contact is stored in the contact data store.

15. A computer program product comprising a computer-readable medium storing program code which, when executed, causes a communication device to carry out the method of any one of claims 1 to 8.

## Amended claims

### Amended claims in accordance with Rule 137(2) EPC.

**1.** A method, comprising:
retrieving, from memory at a communication device (100), a set of contacts matching a character string input in an address entry field (520) at the communication device, the set of contacts comprising contacts retrieved from a contact data store (600); and
inserting an address for a contact selected from the set of contacts into a message to be transmitted from the communication device,
said contacts from the contact data store being obtained from both messages received at and messages transmitted from the communication device, each of said contacts being associated with a frequency of use and with a timestamp reflecting usage of said contact, and said contact data store being maintained such that said contacts are associated with at least a minimum frequency of use.

**2.** The method of claim 1, further comprising transmitting the message comprising the address.

**3.** The method of either claim 1 or claim 2, further comprising:
extracting (910) contacts from both messages received at and messages transmitted from the communication device, said contacts comprising at least an address for at least one of a recipient and a sender of each message; and
storing (940) at least one extracted contact in the contact data store if said extracted contact is associated with either:
a frequency of use greater than any frequency of use associated with a contact already in the contact data store; or
a frequency of use equal to a frequency of use associated with a contact already in the contact data store.

**4.** The method of claim 3, wherein the set of contacts further comprises contacts retrieved from an address book and matching the character string, and further wherein the at least one extracted contact is stored in the contact data store if it does not match a contact currently stored in the address book at the communication device.

**5.** The method of either claim 3 or claim 4, wherein when the contact data store is at capacity, the at least one extracted contact is stored if it is associated with either:
a frequency of use greater than a frequency of use associated with an existing contact in the contact data store; or
a frequency of use equal to a frequency of use associated with an existing contact in the contact data store, and a newer timestamp than a timestamp associated with said existing contact;
and for each extracted contact stored in the contact data store, deleting the existing contact.

**6.** The method of any one of the preceding claims, wherein the contact data store comprises contacts sorted according to decreasing frequency of use and further according to decreasing timestamp.

**7.** The method of any one of the preceding claims, further comprising, either periodically or each time an extracted contact is stored in the contact data store, deleting (1030) from the contact data store contacts stored therein for longer than a predetermined limit and having less than a predetermined minimum frequency of use.

**8.** The method of claim 3, wherein the communication device is in communication with a host system (250), wherein the host system (250) also carries out said extracting contacts and said storing at least one extracted contact to provide a parallel contact data store for restoring at the communication device.

**9.** A communication device (100), comprising:
means (102, 122) adapted to receive and transmit messages;
means (106, 108) adapted to store a contact data store (600) comprising contacts obtained from both messages received at and messages transmitted from the communication device, each of said contacts being associated with a frequency of use and with a timestamp reflecting usage of said contact, and said contact data store being maintained such that said contacts are associated with at least a minimum frequency of use;
means (102) adapted to retrieve a set of contacts matching a character string input in an address entry field displayed on the communication device, wherein the set of contacts comprises contacts retrieved from the contact data store; and
means (102) adapted to insert an address for a contact selected from the set of contacts into a message to be transmitted from the communication device.

**10.** The communication device of claim 9, further comprising means (122) adapted to transmit the message comprising the address.

**11.** The communication device of either claim 9 or claim 10, further comprising:
means (102) adapted to extract contacts from both messages received at and messages transmitted from the communication device, said contacts comprising at least an address for at least one of a recipient and a sender of each message; and
means (106, 108) adapted to store at least one extracted contact in the contact data store if said extracted contact is associated with either:
a frequency of use greater than any frequency of use associated with a contact already in the contact data store; or
a frequency of use equal to a frequency of use associated with a contact already in the contact data store.

**12.** The communication device of claim 11, wherein when the contact data store is at capacity, the at least one extracted contact is stored if it is associated with either:
a frequency of use greater than a frequency of use associated with an existing contact in the contact data store; or
a frequency of use equal to a frequency of use associated with an existing contact in the contact data store, and a newer timestamp than a timestamp associated with said existing contact;
and for each extracted contact stored in the contact data store, deleting the existing contact.

**13.** The communication device of claim 12, wherein the means adapted to store the contact data store is further configured to store contacts sorted according to decreasing frequency of use and further according to decreasing timestamp.

**14.** The communication device of any one of claims 9 to 13, wherein the means adapted to store the contact data store is further configured to either periodically or each time an extracted contact is stored in the contact data store, delete (1030) from the contact data store contacts stored therein for longer than a predetermined limit and having less than a predetermined minimum frequency of use.

**15.** A computer program product comprising a computer-readable medium storing program code which, when executed, causes a communication device to carry out the method of any one of claims 1 to 8.
